# EUROPÄISCHE PATENTSCHRIFT

(11) **EP 3 594 545 B1**
(45) Veröffentlichungstag und Bekanntmachung des Hinweises auf die Patenterteilung: **09.02.2022**
(21) Anmeldenummer: 19174208.9
(22) Anmeldetag: 13.05.2019
(51) Int. Cl.: F16L 3/01, B65H 75/00, F16L 11/12, F16L 53/35, F16L 53/38, B65H 75/44, B65H 75/14

(54) **SCHLAUCHTROMMELANORDNUNG**
HOSE DRUM ASSEMBLY
DISPOSITIF D'ENROULEUR À TAMBOUR POUR TUYAU FLEXIBLE

(30) Priorität: 13.07.2018 DE 102018117048
(43) Veröffentlichungstag der Anmeldung: 15.01.2020
(73) Patentinhaber: Stemmann-Technik GmbH, 48465 Schüttorf (DE)
(72) Erfinder: Bünker, Ludger, 48488 Emsbüren (DE)
(74) Vertreter: Griepenstroh, Jörg

(56) Entgegenhaltungen:
- EP-A1- 2 499 904
- EP-A2- 1 329 660
- US-A- 3 314 562

## Beschreibung

Die Erfindung betrifft eine Schlauchtrommelanordnung mit den Merkmalen im Patentanspruch 1.

Schlauchtrommeln dienen dem geordneten Auf- und Abwickeln von Schläuchen. Schlauchtrommeln sind bei Minusgraden nur bedingt einsetzbar, weil die Gefahr besteht, dass Wasser im Schlauch gefriert, wenn der Fluidstrom unterbrochen wird. Eine Erwärmung von außen ist bei einem aufgewickelten Schlauch über die gesamte Länge kaum möglich und sehr energieaufwendig. Praktisch müsste die gesamte Schlauchtrommel in einem aufgewärmten Raum aufbewahrt werden. In der EP 2 499 904 B1 wird vorgeschlagen, den Schlauch nicht von außen, sondern von innen zu erwärmen, indem in den Schlauch ein elektrisches Heizmittel eingebracht wird. Über eine Schleifringanordnung wird das elektrische Heizmittel mit Energie versorgt. Wenn die Ausflussmenge konstant gehalten werden soll, muss der Schlauchdurchmesser vergrößert werden.

Die EP 1 329 660 A2 offenbart einen flexiblen, mehrschichtigen, beheizbaren Schlauch für die Durchleitung einer Flüssigkeit. Der Schlauch ist flexibel und der Heizleiter wendeiförmig in den Mantel des Schlauches eingebettet. Der elektrische Leiter soll durch die Ummantelung geschützt werden, um eine elektrische Isolierung zu gewährleisten, so dass es zu keiner Beeinträchtigung durch Korrosion oder Kurzschluss infolge eindringender Feuchtigkeit kommen kann. Ein solcher Schlauch kommt insbesondere als flexibler, beheizbarer Druckschlauch für Kraftfahrzeuge zum Einsatz. Bei dieser Art der Verwendung sind die Enden des Schlauches ortsfest, so dass der elektrische Heizleiter ebenfalls über ortsfeste Anschlüsse an jedem Ende mit einer zum Betreiben des Heizleiters erforderlichen Spannungsquelle verbunden werden kann. Bei einer Schlauchtrommel ist mindestens ein Ende des Schlauches verlagerbar, sei es, weil es sich mit der Schlauchtrommel dreht oder weil bei ortsfester Schlauchtrommel auch das andere Ende des Schlauches verlagert wird. Eine ortsfeste Einspeisung von Strom ist nicht möglich.

Die US 3 314 562 offenbart eine Vakuumvorrichtung, um Gegenstände anzuheben, bei welcher ein elektrischer Leiter innerhalb eines Schlauches verlaufen soll, um eine weitere Kabeltrommel einzusparen und um das Kabel in dem Schlauch zu schützen. Im Bereich der Schlauchtrommel ist das Kabel über einen Schleifringübertrager elektrisch leitend verbunden.

Der Erfindung liegt die Aufgabe zugrunde, eine Schlauchtrommelanordnung aufzuzeigen, die auch bei kalter Witterung eingesetzt werden kann und bei welcher große Ausflussmengen bei geringen Schlauchdurchmessern realisiert werden können.

Diese Aufgabe ist bei einer Schlauchtrommelanordnung mit den Merkmalen des Patentanspruchs 1 gelöst.

Die Unteransprüche betreffen vorteilhafte Weiterbildungen der Erfindung.

Die erfindungsgemäße Schlauchtrommelanordnung besitzt einen Trommelkörper mit einer Trommelachse und an der Trommelachse angeordnete Trommelkörperscheiben. Die Trommelkörperscheiben begrenzen die Wickelbreite. Es kann sich um eine Schlauchtrommelanordnung handeln, die spiralförmig oder auch zylindrisch wickelt. Kombinationen sind möglich. Eine spiralische Wicklung kann z.B. in zwei Reihen nebeneinander ausgeführt werden. Ebenso kann eine zylindrische Wicklung in mehreren Lagen übereinander ausgeführt werden.

Der Trommelkörper ist über eine Trommelachse drehbar gelagert. Die Trommelachse trägt den Schlauch und die Trommelkörperscheiben. Je nach Dimensionierung der Schlauchtrommelanordnung sind ein oder zwei Lager für die Trommelachse erforderlich.

Die Trommelachse ist zumindest teilweise als Fluidleitung ausgebildet, an welche der aufzuwickelnde Schlauch angeschlossen ist. Bei zylindrisch wickelnden Schlauchtrommelanordnungen ist die Trommelachse vergleichsweise lang. In diesem Fall ist es nicht erforderlich, die gesamte Trommelachse als Fluidleitung auszubilden. Bei spiralförmig wickelnden Schlauchtrommelanordnungen ist die Trommelachse kurz. Ein einziges Lager reicht aus. An die drehbare Trommelachse ist dann einerseits eine Drehdurchführung mit einer nicht drehbaren Zuleitung angeschlossen und andererseits der Schlauch. Er wird nach radial außen über eine Wickeltrommel geführt, die sich zwischen den Trommelkörperscheiben befindet.

Neben der Drehdurchführung ist auf der Trommelachse eine Schleifringanordnung angeordnet. Über die Schleifringanordnung kann elektrische Energie in ein Heizmittel eingespeist werden. Hierzu ist das Heizmittel elektrisch an die Schleifringanordnung angeschlossen. Das Heizmittel ist in den Mantel des Schlauches eingebettet. Das Einbetten hat den Vorteil, dass der innere Querschnitt des Schlauches komplett frei bleibt. Es entstehen keine Verwirbelungen innerhalb des Schlauches und dadurch auch keine durch den Heizleiter verursachten Strömungsverluste. Das bedeutet wiederum, dass sich die Ausflussmenge nicht reduziert. Im Vergleich zu Schläuchen mit einer innenliegenden Heizwendel können bei gleicher Ausflussmenge Schläuche mit geringeren Innendurchmessern zum Einsatz kommen. Kleinere Schlauchdurchmesser bedeuten gleichzeitig kleinere Schlauchtrommelanordnungen. Dadurch benötigen die Schlauchtrommel-anordnungen weniger Bauraum. Selbst Nachrüstungen von bestehenden Schlauchtrommeln sind möglich.

Das Heizmittel in der Schlauchwand ist vorzugsweise ein Heizband. Dieses Heizband ist in der Lage, das im Schlauch befindliche Wasser über einer Temperatur von 0°C zu halten.

Die Schleifringanordnung befindet sich außerhalb des Wickelbereiches für den Schlauch. Der Schlauch mit dem in dem Mantel eingebetteten Heizmittel ist daher auf der der Schleifringanordnung abgewandten Seite der Trommelkörperscheiben angeordnet und dort mit der Trommelachse verbunden. Die Trommelkörperscheibe steht der Verbindung des Heizmittels mit der Schleifringanordnung im Weg. Erfindungsgemäß ist vorgesehen, dass das Heizmittel auf der einen Seite einer Trommelkörperscheibe nach radial außen aus dem Schlauch herausgeführt ist. Das Heizmittel wird nun außenseitig entlang der Trommelachse weitergeführt und durchsetzt eine Öffnung in der Trommelkörperscheibe. Das Heizmittel ist in diesem Bereich gegen seine Umgebung isoliert.

Das Heizmittel muss in seinem Verlauf von der Schleifringanordnung bis zum Eintritt in den Schlauch keine Wärme abgeben. Das Heizmittel kann in diesem Übergangsbereich auch als Draht mit entsprechendem Querschnitt ausgeführt werden, so dass keine thermischen Belastungen im Bereich der Trommelkörperscheiben entsteht.

Das Heizmittel kann als flexibles Band sehr platzsparend und ohne großen Aufwand von dem Schlauch zu dem mitdrehenden Teil der Schleifringanordnung geführt werden. Im Unterschied zu einer innenliegenden Heizwendel ist es nicht erforderlich, das Heizmittel durch ein Zugmittel gegen die Strömungskraft im Schlauch zu sichern. Es erfolgt keinerlei Querschnittsreduzierung des inneren Schlauchdurchmessers.

Je nachdem, ob es sich um eine zylindrische oder eine spiralig wickelnde Schlauchtrommel handelt, kann das Heizmittel durch nur eine Trommelkörperscheibe geführt werden (zylindrisch wickelnde Schlauchtrommel) oder auch durch beide Trommelkörperscheiben (spiralig wickelnde Schlauchtrommeln).

Die erfindungsgemäße Schlauchtrommelanordnung besitzt vorzugsweise einen Innenkranz und einen Außenkranz an ihren jeweiligen Trommelkörperscheiben. Zwischen dem Innenkranz und dem Außenkranz gibt es Verbinder, die den Außenkranz mit dem Innenkranz verbinden. Der Innenkranz dient gewissermaßen als Flansch für die Verbinder. Bei den Verbindern kann es sich vorzugsweise um Speichen handeln. Auch eine scheibenförmige Verbindung zwischen Innen- und Außenkranz ist möglich. In diesem Fall muss ein Durchbruch für das Heizmittel in der Trommelkörperscheibe erzeugt werden. Bei der Verwendung von Speichen ist das nicht erforderlich. Vorzugsweise wird das Heizmittel radial außenseitig an dem Innenkranz vorbeigeführt. In diesem Fall kann das Heizmittel zwischen den Speichen hindurchgeführt werden. Die Struktur der Verbinder bzw. die Auslegung des Innenkranzes, der als Flansch für die Verbinder dient, muss nicht modifiziert werden. Daher sind Schlauchtrommelanordnungen mit einem geeigneten Schlauch sowie mit entsprechendem Heizmittel nachrüstbar.

Das Heizmittel selbst verläuft innerhalb des Mantels vorzugsweise wendelförmig. Der Schlauch sollte aufgrund des eingebetteten Heizmittels nicht geknickt werden. Die wendelförmige Anordnung im Mantel hilft, Beschädigungen des Heizmittels zu vermeiden. Die Wendelform schafft Bewegungsreserven. Sollte der Schlauch gedehnt oder gestaucht werden oder sich unter thermischen Einflüssen längen oder zusammenziehen, kommt es durch wendeiförmig angeordnete Heizmittel nicht zu Beschädigungen der Heizeinrichtung. Je kleiner die Steigung des wendeiförmigen Heizmittels ist, desto größer ist der Energieeintrag je Längeneinheit des Schlauches. Das Heizmittel ist daher vorzugsweise länger als der Schlauchabschnitt, der aufgeheizt werden soll.

Die erfindungsgemäße Schlauchtrommelanordnung umfasst vorzugsweise wenigstens eine Temperaturmesseinrichtung. Sie dient dazu, die Temperatur eines den Schlauch durchströmenden Fluids zu messen. Ein Kaltleiter besitzt einen sehr großen Messbereich, ist einfach montierbar und sowohl mit, als auch ohne Ummantelung direkt an oder in dem Schlauch verbaubar. Über eine Datenleitung können Messsignale der Temperaturmesseinrichtung einer Auswerteeinheit zugeleitet werden. Diese Auswerteeinheit kann wiederum mit einer Steuereinheit verbunden sein, die dafür vorgesehen ist, bei Unterschreiten einer unteren Temperatur im Schlauch und/oder der Umgebungstemperatur die Einspeisung elektrischer Energie in die Heizmittel freizugeben und bei Überschreiten einer oberen Temperatur die Einspeisung zu beenden. Hierdurch kann das Gefrieren von Wasser im Schlauch wirksam verhindert werden.

Die Schlauchtrommelanordnung wird so betrieben, dass ein elektrisches Heizmittel angeschaltet wird, wenn die Temperaturmesseinrichtung im Schlauch das Unterschreiten einer unteren Temperatur misst. Durch diese Frostwächterfunktion wird die permanente Betriebssicherheit der Schlauchtrommelanordnung gewährleistet. Das Heizmittel wird durch die Steuereinheit abgeschaltet, sobald eine obere Temperatur im Schlauch überschritten wird. Das Heizmittel wird so angesteuert, dass es in Abhängigkeit von den Temperaturen innerhalb und außerhalb des Schlauches ein- und ausgeschaltet wird. Dadurch kann einem frühzeitigen Gefrieren des zu transportierenden Fluides entgegengewirkt werden.

Die Erfindung wird nachfolgend anhand der in den Figuren gezeigten schematischen Ausführungsbeispielen näher beschrieben. Es zeigen:
- Figur 1: eine spiralig wickelnde Schlauchtrommelanordnung in einer Frontansicht;
- Figur 2: die Schlauchtrommelanordnung der Figur 1 in einer Ansicht senkrecht zur Wickelachse;
- Figur 3: den Ausschnitt III der Figur 2;
- Figur 4: Ausschnitt IV der Figur 3;
- Figur 5: die Schlauchtrommelanordnung der Figur 1 in einer perspektivischen Darstellung und
- Figur 6: Ausschnitt VI der Figur 5.

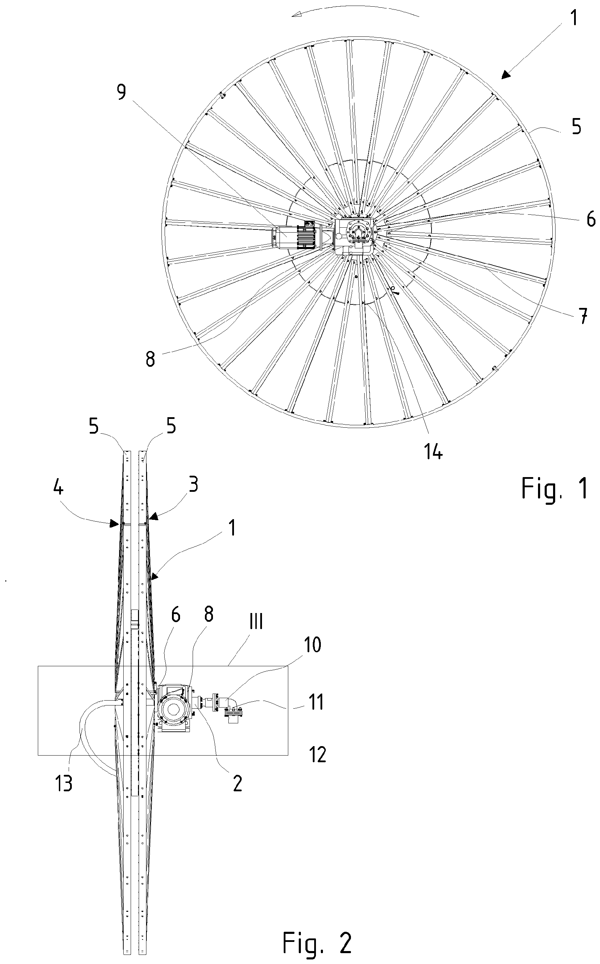

Figur 1 zeigt eine Schlauchtrommelanordnung 1 in Blickrichtung ihrer Drehachse. Es handelt sich um eine Schlauchtrommelanordnung 1, die spiralig wickelt und daher einen relativ großen Durchmesser besitzt. Diese Schlauchtrommelanordnung 1 ist für den Einsatz im Außenbereich vorgesehen. Die Schlauchtrommelanordnung 1 besitzt eine Trommelachse 2 (Figur 2) und an der Trommelachse 2 angeordnete Trommelkörperscheiben 3, 4. Die Trommelkörperscheiben 3, 4 besitzen einen Außenkranz 5 und einen Innenkranz 6. Zwischen dem Außenkranz 5 und dem Innenkranz 6 befinden sich Verbinder 7 in Form von Speichen, die von radial innen nach radial außen strahlenförmig und gerade zwischen dem Innenkranz 5 und dem Außenkranz 6 verlaufen. Der Innenkranz 6 kann auch als Trommelflansch bezeichnet werden.

An der Drehachse der Schlauchtrommelanordnung 1 befindet sich ein Getriebe 8 mit einer daran angeordneten Antriebseinheit 9. In diesem Ausführungsbeispiel handelt es sich um einen Elektromotor. In nicht näher dargestellter Weise wird die Trommelachse 6 innerhalb des Getriebes 8 gelagert.

Figur 2 zeigt, dass in Verlängerung der Drehachse eine Drehdurchführung 10 an der Trommelachse 2 angeordnet ist. Die Drehdurchführung 10 ist über einen Krümmer 11 mit einem nicht näher dargestellten Einspeisepunkt verbunden. Der Einspeisepunkt 12, der Krümmer 11 und das Getriebe 8 mit der Antriebseinheit 9 sind ortsfest. Demgegenüber dreht sich die Drehachse 2 zusammen mit den Trommelkörperscheiben 3, 4. Ebenso dreht sich zusammen mit den Trommelkörperscheiben 3, 4 ein Schlauch 13 mit. In Figur 2 ist zu erkennen, dass der Schlauch 13 auf der dem Getriebe 8 abgewandten Seite aus der Schlauchtrommelanordnung 1 herausgeführt ist. Im Bogen wird er wieder zwischen die beiden Trommelkörperscheiben 3 und 4 geführt. In nicht näher dargestellter Weise wird der Schlauch 13 dort auf eine Wickeltrommel 14 aufgewickelt, wie sie in Figur 1 zu erkennen ist.

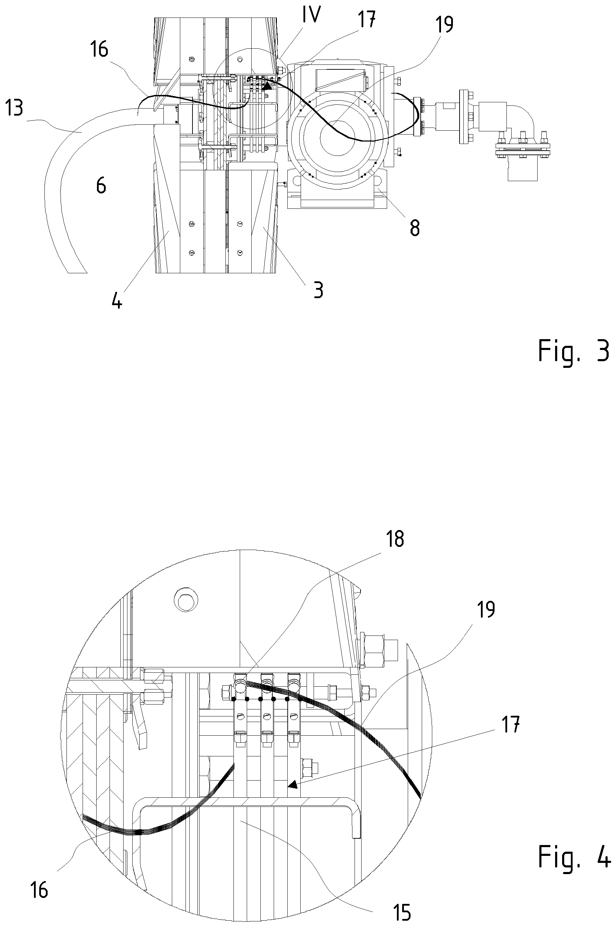

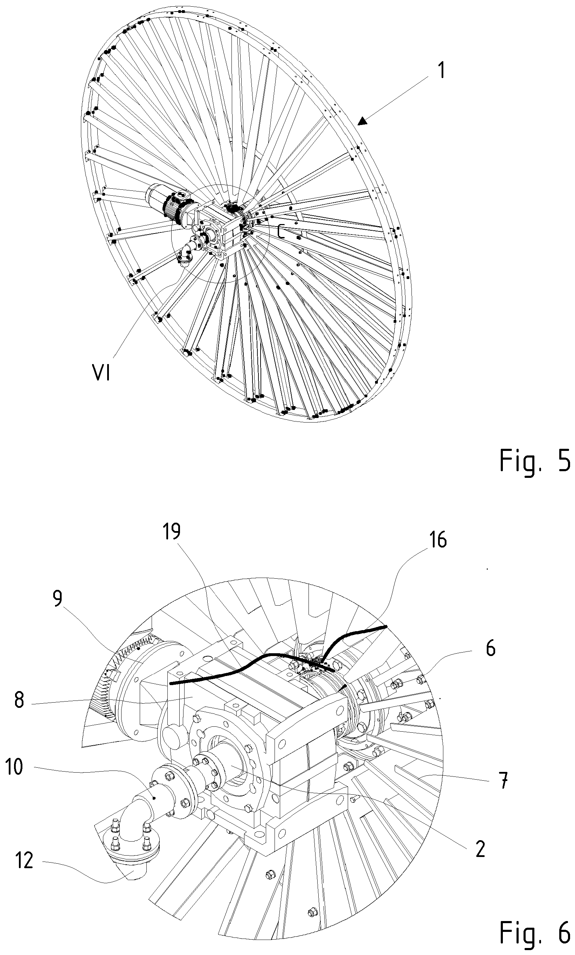

Die vergrößerte Darstellung der Figur 3 zeigt ein Heizmittel 16, das aus dem Schlauch 13, benachbart der in der Bildebene linken Trommelkörperscheibe 4, aus dem Schlauch 13 austritt. Dieses Heizmittel 16 ist innerhalb des Mantels des Schlauches 13 angeordnet. Es verläuft dort wendelförmig. Das Heizmittel 16 ist ein elektrischer Leiter, der sich erwärmt, wenn ein Strom durch ihn fließt. Das Heizmittel 16 ist elektrisch leitend an eine Schleifringanordnung 17 angeschlossen, die sich benachbart dem Getriebe 8 befindet. Die Schleifringanordnung 17 ist sehr kompakt und befindet sich nahezu innerhalb der in der Bildebene rechten Trommelkörperscheibe 3. Die Schleifringanordnung 17 besitzt einen feststehenden Teil 18 (Figur 6), an den eine elektrische Zuleitung 19 angeschlossen ist. Die Zuleitung 19 ist rein schematisch angedeutet, ebenso wie das Heizmittel 16. Das Heizmittel 16 führt von dem sich mitdrehenden Teil 15 der Schleifringanordnung 17 durch die beiden Trommelscheibenkörper 3, 4 hindurch zu dem Schlauch 13.

Der Verlauf des Heizmittels 16 zwischen dem Schlauch 13 und der Schleifringanordnung 17 stört das Aufwickeln des Schlauches 13 in keiner Weise, da sich das Heizmittel 16 sehr nah im Zentralbereich der Schlauchtrommelanordnung 1 befindet. Da die Speichen der Verbindung 7 einen hinreichenden Abstand zueinander haben, kann das Heizmittel 16 bzw. dessen Verbindung zur Schleifringanordnung 17 zwischen den Speichen hindurchgeführt werden. Es ist keine Modifikation an dem Innenkranz 6 erforderlich. Das Heizmittel 16 wird radial außenseitig an dem Innenkranz 6 vorbeigeführt, wie es auch in Figur 6 zu erkennen ist.

Figur 6 zeigt in rein schematischer Darstellung die elektrische Zuleitung 19 zu dem feststehenden Teil der Schleifringanordnung 17 und das elektrische Heizmittel 16, das von dem sich drehenden Teil der Schleifringanordnung 17 wegführt.

Anhand der Figur 4 ist erkennen, dass mehrere Schleifringe vorgesehen sind, die mit einer entsprechenden Anzahl von Schleifkontakten in Kontakt stehen. In diesem Ausführungsbeispiel handelt es sich um drei Schleifkontakte. Die gesamte Schleifringanordnung 17 ist witterungsgeschützt angeordnet (nicht dargestellt). Die drei Schleifringe der Schleifringanordnung 17 sind ein Vorlauf, ein Rücklauf und ein Schutzleiter des Heizmittels 16. Auf die Darstellung der weiteren elektrischen Anschlussmittel wurde aus Gründen der Übersichtlichkeit verzichtet. Das Funktionsprinzip basiert darauf, das elektrische Heizmittel 16 bedarfsgerecht anzuschalten, wenn über Messmittel eine Temperatur am Schlauch 13, im Schlauch 13 oder in der Umgebung festgestellt wird, die auf ein Gefrieren des Wassers im Schlauch 13 schließen lässt oder darauf schließen lässt, dass ein Gefrieren bevorsteht. Temperaturmesseinrichtungen zur Messung der Außentemperatur und Innentemperatur können dementsprechend zusätzlich an dem Schlauch 13, an der Umgebung oder auch an der Trommelachse 2 vorgesehen sein.

### Bezugszeichen:

- 1 -: Schlauchtrommelanordnung
- 2 -: Trommelachse
- 3 -: Trommelkörperscheibe
- 4 -: Trommelkörperscheibe
- 5 -: Außenkranz
- 6 -: Innenkranz
- 7 -: Verbindung in Form einer Speiche
- 8 -: Getriebe
- 9 -: Antriebseinheit
- 10 -: Drehdurchführung
- 11 -: Krümmer
- 12 -: Einspeisepunkt
- 13 -: Schlauch
- 14 -: Wickelmantel
- 15 -: Beweglicher Teil von 17
- 16 -: Heizmittel
- 17 -: Schleifringanordnung
- 18 -: Feststehender Teil von 17
- 19 -: Elektrische Zuleitung

## Patentansprüche

1. Schlauchtrommelanordnung mit folgenden Merkmalen:
- Ein Trommelkörper besitzt eine Trommelachse (2) und an der Trommelachse (2) angeordnete Trommelkörperscheiben (3, 4);
- der Trommelkörper ist über seine Trommelachse (2) drehbar gelagert und ist dafür vorgesehen, einen Schlauch (13) der Schlauchtrommelanordnung (1) wickelnd aufzunehmen;
- die Trommelachse (2) ist als Fluidleitung ausgebildet, an welche der aufzuwickelnde Schlauch (13) angeschlossen ist;
- die drehbare Trommelachse (2) ist über eine Drehdurchführung (10) mit einer nicht drehbaren Zuleitung der Schlauchtrommelanordnung (1) verbunden;
- mittels einer Schleifringanordnung (17) der Schlauchtrommelanordnung (1) ist elektrische Energie in ein Heizmittel (16) einspeisbar;
- das Heizmittel (16) ist auf einer Seite einer Trommelkörperscheibe (3, 4) aus dem Schlauch (13) herausgeführt,
**dadurch gekennzeichnet, dass**
- das Heizmittel (16) in den Mantel des Schlauches (13) eingebettet ist, wobei das Heizmittel (16) in seinem weiteren Verlauf von dem Schlauch (13) kommend die Trommelkörperscheibe (3, 4) durchsetzt und außenseitig der Trommelachse (2) zu einem sich mit der Trommelachse (2) mitdrehenden Teil (15) der Schleifringanordnung (17) verläuft.

2. Schlauchtrommelanordnung nach Anspruch 1, **dadurch gekennzeichnet, dass** die Trommelkörperscheiben (3, 4) einen Innenkranz (6) und einen Außenkranz (5) haben sowie Verbinder (7), die den Außenkranz (5) mit dem Innenkranz (6) verbinden, wobei das Heizmittel (16) radial außenseitig an dem Innenkranz (6) vorbeigeführt ist.

3. Schlauchtrommelanordnung nach Anspruch 2, **dadurch gekennzeichnet, dass** das Heizmittel (16) zwischen den als Speichen ausgeführten Verbindern (7) hindurchgeführt ist.

4. Schlauchtrommelanordnung nach einem der Ansprüche 1 bis 3, **dadurch gekennzeichnet, dass** das Heizmittel (16) wendeiförmig innerhalb des Mantels des Schlauches (13) verläuft.

5. Schlauchtrommelanordnung nach einem der Ansprüche 1 bis 4, **dadurch gekennzeichnet, dass** eine Temperaturmesseinrichtung vorgesehen ist zur Messung der Temperatur eines den Schlauch (13) durchströmenden Fluids.

6. Schlauchtrommelanordnung nach Anspruch 5, **dadurch gekennzeichnet, dass** die Temperaturmesseinrichtung eine Datenleitung umfasst, über welche ein Messsignal einer Auswerteeinheit zugeleitet wird.

7. Schlauchtrommelanordnung nach einem der Ansprüche 1 bis 6, **dadurch gekennzeichnet, dass** außerhalb des Schlauches (13) eine weitere Temperaturmesseinrichtung angeordnet ist, die mit einer Auswerteeinheit verbunden ist.

8. Schlauchtrommelanordnung nach Anspruch 6 oder 7, **dadurch gekennzeichnet, dass** die Auswerteeinheit mit einer Steuereinheit verbunden ist, welche dafür vorgesehen ist, bei Unterschreiten einer unteren Temperatur im Schlauch (13) und/oder der Umgebungstemperatur die Einspeisung elektrischer Energie in die Heizmittel (16) freizugeben und bei Überschreiten einer oberen Temperatur die Einspeisung zu beenden.

## Claims

1. Sample Hose drum assembly with the following features:
- a drum body has a drum axis (2) and drum body discs (3, 4) arranged on the drum axis (2);
- the drum body is rotatably mounted on its drum axis (2) and is intended to receive a hose (13) of the hose drum arrangement (1) in a winding manner;
- the drum axis (2) is formed as a fluid line to which the hose (13) to be wound is connected;
- the rotatable drum axis (2) is connected via a rotary feedthrough (10) to a non-rotatable feed line of the hose drum arrangement (1);
- a heating means (16) can be supplied with electrical energy by means of a slip ring arrangement (17) of the hose drum arrangement (1);
- the heating means (16) is led out of the holes (13) on one side of the drum body disc (3, 4),
**characterised in that**
- the heating means (16) is embedded in the jacket of the hose (13), wherein the heating means (16), in its continuation coming from the hose (13), passes through the drum body disc (3, 4) and runs on the outside of the drum axis (2) to a part (15) of the slip ring arrangement (17) that rotates with the drum axis (2).

2. Hose drum arrangement according to claim 1, **characterised in that** the drum body discs (3, 4) have an inner rim (6) and an outer rim (5) as well as connectors (7), which connect the outer rim (5) to the inner rim (6), wherein the heating means (16) is guided past the inner rim (6) on the outside.

3. Hose drum arrangement according to claim 2, **characterised in that** the heating means (16) is passed between the connectors (7) designed as spokes.

4. Hose drum arrangement according to any one of the claims 1 to 3, **characterised in that** the heating means (16) runs helically inside the jacket of the hose (13).

5. Hose drum arrangement according to any one of the claims 1 to 4, **characterised in that** a temperature measurement device is provided for measuring the temperature of a fluid flowing through the hose (13).

6. Hose drum arrangement according to claim 5, **characterised in that** the temperature measurement device comprises a data line, via which a measurement signal is sent to an evaluation unit.

7. Hose drum arrangement according to any one of the claims 1 to 6, **characterised in that** a further temperature measurement device is arranged outside of the hose (13) and is connected to an evaluation unit.

8. Hose drum arrangement according to claim 6 or 7, **characterised in that** the evaluation unit is connected to a control unit, which is provided to enable the supply of electrical energy to the heating means (16) when a temperature in the hose (13) and/or the ambient temperature falls below a lower level, and to terminate the supply when an upper temperature is exceeded.

## Revendications

1. Dispositif de tambour à tuyau flexible avec les caractéristiques suivantes :
- un corps de tambour possède un axe de tambour (2) et des disques de corps de tambour (3, 4) agencés au niveau de l'axe de tambour (2) ;
- le corps de tambour est logé de manière rotative par le biais de son axe de tambour (2) et est prévu afin de recevoir par enroulement un tuyau flexible (13) du dispositif de tambour à tuyau flexible (1) ;
- l'axe de tambour (2) est réalisé comme conduite de fluide, à laquelle le tuyau flexible à enrouler (13) est raccordé ;
- l'axe de tambour (2) rotatif est relié par le biais d'un passage rotatif (10) à une conduite d'alimentation non rotative du dispositif de tambour à tuyau flexible (1) ;
- de l'énergie électrique peut être injectée dans un moyen de chauffage (16) au moyen d'un agencement de bague collectrice (17) du dispositif de tambour à tuyau flexible (1) ;
- le moyen de chauffage (16) est guidé sur un côté d'un disque de corps de tambour (3, 4) hors du tuyau flexible (13),
**caractérisé en ce que**
- le moyen de chauffage (16) est intégré dans l'enveloppe du tuyau flexible (13), dans lequel le moyen de chauffage (16) traverse dans son autre étendue venant du tuyau flexible (13) le disque de corps de tambour (3, 4) et côté extérieur l'axe de tambour (2) s'étend jusqu'à une partie (15) tournant avec l'axe de tambour (2) de l'agencement de bague collectrice (17).

2. Dispositif de tambour à tuyau flexible selon la revendication 1, **caractérisé en ce que** les disques de corps de tambour (3, 4) présentent une couronne intérieure (6) et une couronne extérieure (5) ainsi que des connecteurs (7) qui relient la couronne extérieure (5) à la couronne intérieure (6), dans lequel le moyen de chauffage (16) est guidé radialement côté extérieur devant la couronne intérieure (6).

3. Dispositif de tambour à tuyau flexible selon la revendication 2, **caractérisé en ce que** le moyen de chauffage (16) est guidé entre les connecteurs (7) conçus comme rayons.

4. Dispositif de tambour à tuyau flexible selon l'une quelconque des revendications 1 à 3, **caractérisé en ce que** le moyen de chauffage (16) s'étend en hélice à l'intérieur de l'enveloppe du tuyau flexible (13).

5. Dispositif de tambour à tuyau flexible selon l'une quelconque des revendications 1 à 4, **caractérisé en ce qu'**un dispositif de mesure de température est prévu pour la mesure de la température d'un fluide traversant le tuyau flexible (13).

6. Dispositif de tambour à tuyau flexible selon la revendication 5, **caractérisé en ce que** le dispositif de mesure de température comporte une conduite de données, par le biais de laquelle un signal de mesure est fourni à une unité d'évaluation.

7. Dispositif de tambour à tuyau flexible selon l'une quelconque des revendications 1 à 6, **caractérisé en ce qu'**un autre dispositif de mesure de température est agencé en dehors du tuyau flexible (13), lequel est relié à une unité d'évaluation.

8. Dispositif de tambour à tuyau flexible selon la revendication 6 ou 7, **caractérisé en ce que** l'unité d'évaluation est reliée à une unité de commande qui est prévue afin de libérer en cas de non-atteinte d'une température inférieure dans le tuyau flexible (13) et/ou de la température ambiante l'injection d'énergie électrique dans les moyens de chauffage (16) et de terminer l'injection en cas de dépassement d'une température supérieure.
